# EUROPÄISCHE PATENTSCHRIFT

(11) **EP 4 139 045 B1**
(45) Veröffentlichungstag und Bekanntmachung des Hinweises auf die Patenterteilung: **14.02.2024**
(21) Anmeldenummer: 21720284.5
(22) Anmeldetag: 22.04.2021
(51) Int. Cl.: B01J 23/46, B01J 35/00, B01J 35/06, C01B 21/26

(54) **EDELMETALLNETZ FUER DIE KATALYSIERUNG VON GASPHASENREAKTIONEN**
PURE METAL NETWORK FOR CATALYSING GAS PHASE REACTIONS
RÉSEAU MÉTALLIQUE PRÉCIEUX DESTINÉ À LA CATALYSE DES RÉACTIONS EN PHASE GAZEUSE

(30) Priorität: 22.04.2020 EP 20170800
(43) Veröffentlichungstag der Anmeldung: 01.03.2023
(73) Patentinhaber: Umicore AG & Co. KG, 63457 Hanau-Wolfgang (DE)
(72) Erfinder: BORN, Dirk, 63505 Langenselbold (DE); WISER, Artur, 60486 Frankfurt (DE); ZEUNER, Stefan, 61352 Bad Homburg v.d.H. (DE)
(86) Internationale Anmeldenummer: PCT/EP2021/060547
(87) Internationale Veröffentlichungsnummer: WO 2021/214232

(56) Entgegenhaltungen:
- EP-A1- 0 259 966
- EP-A1- 0 474 972
- EP-B1- 0 474 972

## Beschreibung

Edelmetallkatalysierte Gasreaktionen wie die Oxidation von Ammoniak mit Luftsauerstoff in der Salpetersäureproduktion (Ostwald-Verfahren) oder die Umsetzung von Ammoniak mit Methan in Anwesenheit von Sauerstoff zu Blausäure (Andrussow-Verfahren) haben seit langem erhebliche industrielle Bedeutung erlangt, werden durch sie doch im großtechnischen Maßstab Basischemikalien für die chemische Industrie und für die Düngemittelproduktion bereitgestellt (Andreas Jess, Peter Wasserscheid: Chemical Technology; Wiley-VCH Verlag, Weinheim 2013, Kapitel 6.4.)

Kern dieser heterogen katalysierten Gasreaktionen sind Edelmetallkatalysatoren in Form gasdurchlässiger räumlicher Gebilde, an bzw. in denen die Reaktion abläuft. Hierbei haben sich seit geraumer Zeit Netze in Form von Geweben (DE4028916 C2) oder Gestricken (EP0364153 B1, DE4206199 C1) aus feinen Edelmetalldrähten durchgesetzt.

EP0474972 A1 und EP0259966 A1 offenbaren Katalysatornetze aus platin-und rhodiumhaltigen Drähten.

Die Katalysatornetze werden dabei üblicherweise in einem Strömungsreaktor in einer Ebene senkrecht zur Strömungsrichtung des Gasgemisches angeordnet. Auch kegelförmige Anordnungen sind bekannt. Es werden zweckmäßigerweise mehrere Netze hintereinander angeordnet und zu einem Katalysatornetzstapel zusammengefasst.

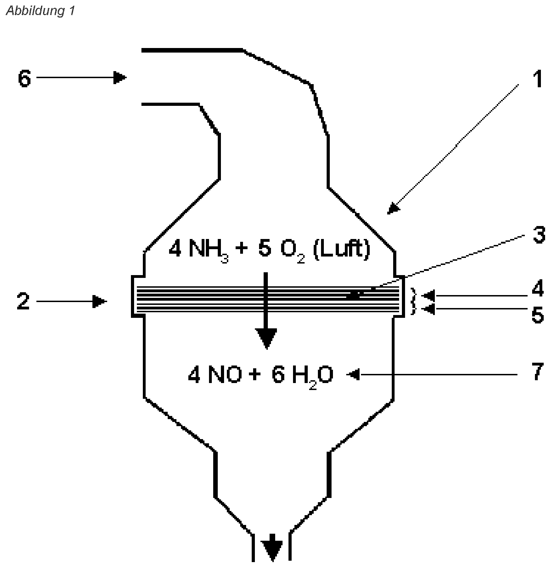

Abbildung 1 zeigt am Beispiel der katalytischen Ammoniakoxidation (Ostwald-Verfahren) schematisch den Reaktor mit dem darin verbauten Netzstapel, dessen Funktion im Folgenden beschrieben wird:
In der Reaktionszone (2) des Strömungsreaktors (1) ist in einer Ebene senkrecht zur Strömungsrichtung der Netzstapel (3), der aus mehreren hintereinander liegenden Katalysatornetzen (4) und nachgeschalteten Trenn- und Getternetzen (5) besteht, angeordnet. Dieser Netzstapel wird durch Einklemmen in seiner Position gehalten.

Das Reaktionsgas (Ammoniak-Luftsauerstoffgemisch mit einem Ammoniakgehalt von 9 - 13 Vol.-%) (6) durchströmt unter atmosphärischem oder erhöhtem Druck den Netzstapel (3), wobei im Eintrittsbereich die Zündung des Gasgemisches erfolgt und die Verbrennungsreaktion zu Stickstoffmonoxid (NO) und Wasser die gesamte Reaktionszone (2) erfasst:

4 NH₃ + 5 O₂ (Luft) --> 4 NO + 6 H₂O

Unerwünschte Nebenreaktionen sind die Oxidation des Ammoniaks zu Stickstoff und Lachgas (N₂O).

Das NO im abströmenden Reaktionsgasgemisch reagiert in der Folge mit dem überschüssigen Luftsauerstoff zu NO₂:

2 NO + O₂ --> 2 NO₂

Eine unerwünschte Nebenreaktion hierbei ist die Bildung von Lachgas:

2 NO + ½ O₂ --> 2 N₂O

Das NO₂ reagiert wiederum in einer nachgeschalteten Absorption mit Wasser zu Salpetersäure, welche etwa der Düngemittelproduktion zugeführt wird:

3 NO₂ + H₂O --> 2 HNO₃ + NO

Für die Herstellung der Netze werden derzeit homogene Edelmetalldrähte aus Platin, Rhodium oder aus Legierungen dieser Metalle mit anderen Edel- oder Unedelmetallen verwendet. Typisch sind hierbei Platin-Rhodium- oder Platin-Palladium-Rhodium-Legierungen mit 88 bis 97 Gew.-% Platin. Platin ist erforderlich, um einen möglichst hohen Ammoniak-Umsatz zu erzielen, Rhodium verbessert die Selektivität zu NO, reduziert dadurch die Emission von Lachgas, und erhöht die mechanische Festigkeit [G. R. Maxwell: "Synthetic Nitrogen Products - A Practical Guide to the Products and Processes", Springer Science + Business Media, Inc. 2005, Seite 220]. Palladium wiederum wird verwendet, um, abhängig von den Edelmetallpreisen, die Edelmetallkosten durch Ersatz von Platin zu senken.

Während der ersten Betriebsstunden findet eine Restrukturierung der Oberfläche statt; der Katalysator wird 'aktiviert'. Insbesondere bilden sich Risse und eine Blumenkohl-ähnliche Struktur, die aufgrund der hohen Oberfläche auch die Aktivität erhöhen [Oliver Henkes: "Contaminants and their effect on catalytic gauze performance in nitric acid plants", Nitrogen+Syngas 2019 International Conference & Exhibition (Berlin 4-7. März 2019].

Rhodium an der Drahtoberfläche oxidiert zu Rhodiumoxid, weiteres Rhodium diffundiert aus dem Inneren des Drahtes nach. Das Rhodiumoxid bildet zum Teil nadelförmige Strukturen, die die Selektivität des Katalysators zu NO₂ senken und damit zu höherer Lachgasbildung führen. Des Weiteren behindern die Nadeln die Ausbildung der Blumenkohl-ähnlichen Oberfläche [D2] und senken somit die Aktivität des Katalysators. Unterhalb einer bestimmten Temperatur ist Rhodiumoxid thermodynamisch stabil [D1]. Aus diesem Grund wird der Reaktor möglichst rasch über die Mindestbetriebstemperatur Tₘᵢₙ aufgeheizt, bei der Rhodiumoxid thermodynamisch nicht mehr stabil ist. Die während des Hochfahrens sich gebildeten Rhodiumoxidnadeln an der Drahtoberfläche zersetzen sich jedoch auch bei hohen Temperaturen nur sehr langsam.

Tₘᵢₙ ist abhängig von dem Sauerstoffpartialdruck und der Rhodiumkonzentration. Je höher der Sauerstoffpartialdruck und die Rhodiumkonzentration, desto höher ist Tₘᵢₙ. Deshalb muss bei höheren Rhodiumkonzentrationen die Reaktortemperatur ebenfalls erhöht werden. Dies wiederum erhöht den Edelmetallabtrag der Platinnetze; eine Erhöhung der Reaktortemperatur von 820°C auf 920°C bedingt eine Verzehnfachung des Edelmetallabtrags [Franz Sperner, Wolfgang Hohmann: "Rhodium-Platinum Gauzes for Ammonia Oxidation", Platinum Metals Review (1976) 20 (1) 12-20].

Aus obigen Gründen ist unterhalb von Tₘᵢₙ ein niedriger Rhodiumgehalt in der Oberfläche wünschenswert, um die Bildung von Rhodiumnadeln zu minimieren. Oberhalb von Tₘᵢₙ wiederum ist eine höhere Rhodiumkonzentration von ca. 5 bis 10 Gew.-% wünschenswert, da in diesem Bereich das Rhodiumoxid thermodynamisch instabil ist, und um die Selektivität zu NO zu erhöhen.

Da zudem Rhodium höheren Preisschwankungen als Platin unterliegt und meist deutlich teurer ist, stellt die Rhodiumkonzentration des Drahtes ein Kompromiss dar.

Aufgabe der vorliegenden Erfindung ist deshalb, einen Draht für die Netzkatalysatorfertigung bereitzustellen, der eine minimierte Rhodiumanreicherung und Rhodiumnadelbildung an der Oberfläche während der Aufheizphase aufweist und eine gute Aktivität und Selektivität zur Ammoniakoxidation oberhalb von Tₘᵢₙ bietet. Zudem sollen die Edelmetallkosten möglichst gering gehalten werden.

Die Aufgabe wird gelöst durch einen Draht bestehend aus Platingruppenmetallen für die Herstellung von Netzkatalysatoren, enthaltend mindestens Platin und Rhodium, dadurch gekennzeichnet, dass der Draht als Manteldraht aufgebaut ist und aus einem Kern und einem Mantel oder mehreren vom Kern aus radialsymmetrisch übereinander angeordneten Mänteln besteht und die Rhodiumkonzentration im äußersten Mantel niedriger ist als die im direkt darunter angeordneten Mantel oder Kern.

Die Gruppe der Platingruppenmetalle besteht aus den Metallen Ru, Rh, Pd, Os, Ir, und Pt [A.F. Holleman, E. Wiberg: Lehrbuch der Anorganischen Chemie, Walter de Gruyter, Berlin 1995; Seite 1197].

Durch die geringere Konzentration an Rhodium im äußersten Mantel dieses Drahtaufbaus wird während der Anfahrphase des Reaktors die Rhodiumnadelbildung und die Rhodiumkonzentration in der Drahtoberfläche reduziert. Durch Diffusion von Rhodium aus dem darunter angeordneten Mantel oder Kern wird dann die notwendige Rhodiumkonzentration in der Oberfläche des Drahtes erreicht. Aus diesem Grund ist es wichtig, dass der äußerste Mantel nicht zu dick ist. Deshalb findet eine Manteldicke von 1 µm bis 10 µm, bevorzugt von 1 µm bis 5 µm Verwendung. Der Draht hat insgesamt einen Gesamtdurchmesser von 50 µm bis 150 µm.

Werden in diesem Dokument Bereiche genannt, so gelten die Bereichsgrenzen als beinhaltet.

Die Rhodiumkonzentration im äußersten Mantel beträgt 1 Gew.-% bis 3 Gew.-%, bevorzugt 2 Gew.-% bis 3 Gew.-%, insbesondere 2,5 Gew.-% bis 3 Gew.-%, und die Rhodiumkonzentration im darunter angeordneten Mantel oder Kern liegt im Bereich von 5 Gew.-% bis 20 Gew.-%, bevorzugt im Bereich von 8 Gew.-% bis 12 Gew.-%, insbesondere 9 Gew.-% bis 11 Gew.-%. Besonders bewährt hat sich ein Rhodiumkonzentration von 3 Gew.-% im äußersten Mantel und 10 Gew.-% im darunter angeordneten Mantel oder Kern. Bei einer Rhodiumkonzentration im äußersten Mantel von über 3 Gew.-% nimmt der oben beschriebene Effekt der Rhodiumanreicherung und Rhodiumnadelbildung an der Oberfläche während der Aufheizphase wieder zu, bei einer Rhodiumkonzentration von weniger als 1 Gew.-% ist die Verarbeitbarkeit nicht mehr gegeben, da die Zugfestigkeit des Materials abnimmt. Zudem würde ein Rhodium-freier äußerster Mantel zu einer hohen Selektivität zu N₂O während der Aufheizphase führen, so dass ein geringer Anteil von Rhodium erforderlich ist.

Im einfachsten Fall kann der Draht auch nur aus einem Kern und einem Mantel bestehen. Dies hat den Vorteil einer einfacheren Herstellung. Allerdings muss in dem Fall der gesamte Kern eine höhere Rhodiumkonzentration als im Mantel aufweisen, was die Edelmetallkosten je nach Marktpreis des Rhodiums signifikant erhöhen kann.

Aus Kostengründen weist eine bevorzugte Variante einen Kern und zwei oder mehr Mäntel auf, wobei der Kern zu mindestens 92 Gew.-%, bevorzugt zu mindestens 97 Gew.-% aus Platin und / oder Palladium besteht. Diese Reduzierung des Rhodiumgehalts des Kerns ist möglich, da das Rhodium, welches in den äußersten Mantel diffundieren muss, durch den Mantel, der direkt unterhalb des äußersten Mantels angeordnet ist, bereitgestellt wird. Ein geringer Anteil an Rhodium im Kern, bevorzugt weniger oder gleich 3 Gew.-%, kann verwendet werden, um die Zugfestigkeit zu erhöhen und die Verarbeitbarkeit zu verbessern.

Dieser Draht wird für die Herstellung von Netzkatalysatoren verwendet. Dies kann durch Weben, Wirken oder Stricken erfolgen. Bevorzugt erfolgt die Netzkatalysatorherstellung über Stricken.

Das bevorzugte Verfahren zur Herstellung eines erfindungsgemäßen Netzkatalysators beinhaltet die folgenden Schritte in folgender Reihenfolge:
a. Bereitstellen von einem Bolzen, Platin und / oder Palladium umfassend,
b. Bereitstellen von einem Rohr oder mehreren Rohren, Platin und Rhodium umfassend, wobei der Innendurchmesser des dünnsten Rohres so gewählt ist, dass das dünnste Rohr bündig über den Bolzens geschoben werden kann, sowie die Durchmesser der weiteren Rohre so gewählt sind, dass sie bündig übereinander geschoben werden können und das äußerste Rohr eine geringere Rhodiumkonzentration aufweist als der darunter angeordnete Mantel oder Kern
   Als 'bündig' soll in dieser Erfindung gelten, dass der Innendurchmesser des äußeren Rohres gleich oder um eine gewählte Toleranz größer ist als der Außendurchmesser des Bolzens oder Rohres, über den das äußere Rohr geschoben werden soll. Eine übliche Toleranz sind in diesem Fall 1 mm bis 10 mm.
c. Übereinander schieben der Rohre und des Bolzens, beginnend mit dem Schieben des dünnsten Rohres über den Bolzen, wonach die Rohre nacheinander mit steigendem Durchmesser aufgeschoben werden, und Verbinden des Bolzens mit dem Rohr oder den Rohren, zum Beispiel auf dem Rohrzug, wodurch ein Rohling entsteht
d. Glühen und anschließendes kaltes Walzen des Rohlings; dieser Schritt kann mehrmals wiederholt werden
e. Drahtziehen des Rohlings bis zur gewünschten Drahtstärke
f. Stricken des Katalysatornetzes aus dem Draht

Auch können mehrere Mäntel gleicher Zusammensetzung unterhalb des äußersten Mantels verwendet werden. Dies kann notwendig sein, um die Verarbeitbarkeit zu ermöglichen, da die Formung der Rohre für den Mantel ab einer bestimmten Wandstärke erschwert oder sogar unmöglich wird.

Weiterhin ist ein Verfahren zur Oxidation von Ammoniak Teil der Erfindung, bei welchem ein oder mehrere erfindungsgemäße Katalysatornetze angewendet werden.

### Beispiel 1

Es wird ein Bolzen aus Platin mit einem Durchmesser von 8 mm gefertigt. Ein erstes Rohr mit einem Innendurchmesser von 10 mm und einem Außendurchmesser von 14 mm, bestehend aus einer Platin-Rhodium-Legierung aus 90 Gew.-% Platin und 10 Gew.-% Rhodium wird 30 min bei 1000°C geglüht und nach Abkühlen über den Bolzen geschoben und auf einen Außendurchmesser von 12 mm gezogen (Stange A). Ein zweites Rohr mit einem Innendurchmesser von 18 mm und einem Außendurchmesser von 22 mm, bestehend aus einer Platin-Rhodium-Legierung aus 90 Gew.-% Platin und 10 Gew.-% Rhodium wird 30 min bei 1000°C geglüht und nach Abkühlen über Stange A geschoben (Stange B). Hierüber wird wiederum ein drittes Rohr mit einem Innendurchmesser von 21 mm und einem Außendurchmesser von 22,5 mm, bestehend aus einer Platin-Rhodium-Legierung aus 97 Gew.-% Platin und 3 Gew.-% Rhodium, über Stange B geschoben und auf einen Außendurchmesser von 17,5 mm gezogen. Der auf diese Art erhaltene Rohling wird erst für 30 min bei 1000°C geglüht und anschließend kalt auf einen Außendurchmesser von 9,5 mm gewalzt und nachfolgend für 10 h bei 1150°C geglüht. Anschließend wird der Rohling weiter bis zu einem Außendurchmesser von 1,5 mm gewalzt und danach auf der Drahtziehmaschine zu einem Draht von 76 µm Durchmesser gezogen. Der so erhaltene Draht weist eine Dicke des äußersten Mantels von ca. 3 µm auf, der mittlere Mantel, bestehend aus dem Material des ersten und zweiten Rohres, hat eine Dicke von ca. 10 µm.

### Vergleichsbeispiel

Es wird ein Bolzen aus einer Platin-Rhodium-Legierung aus 95 Gew.-% Platin und 5 Gew.-% Rhodium mit einem Durchmesser von 32 mm gefertigt. Dieser Rohling wird erst für 30 min bei 1000 °C geglüht und anschließend kalt gewalzt. Dieser Vorgang wird noch 2x wiederholt. Danach wird der Rohling auf der Drahtziehmaschine zu einem Draht von 76 µm Durchmesser gezogen.

### Herstellung der Katalysatornetze

Das Katalysatornetz wird durch Stricken an einer Flachbettstrickmaschine als Rechts-Rechts-Gestrick aus dem jeweils erhaltenen Draht erhalten. Für die Labortests werden Netze mit einem Flächengewicht von 600 g/m² und einem Durchmesser von 32 mm angefertigt.

Die Benennung der Katalysatornetze erfolgt entsprechend dem jeweils verwendeten Draht.

### Vermessung der Katalysatornetze

Die Katalysatornetze von Beispiel 1 und dem Vergleichsbeispiel wurden in einem Laborreaktor von 30 mm Innendurchmesser als Netzstapel von 8 gleichen Netzen vermessen. Dabei wurde ein Volumenstrom von 1140 Norm-Liter/h bei einem Druck von 405000 Pa eingestellt. Der NH₃-Anteil betrug 10.53 Vol.-%, der Rest des Gases bestand aus Luft.

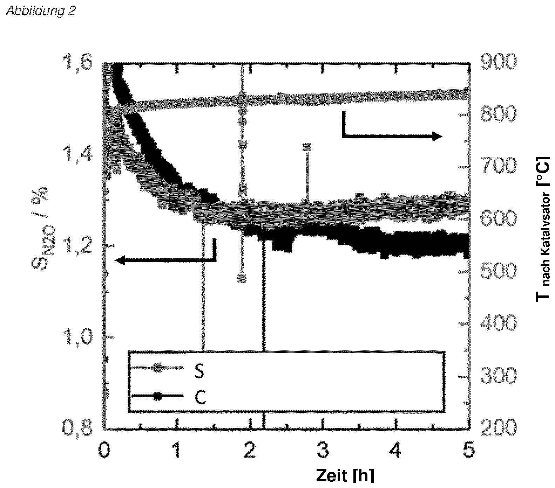

Abbildung 2 zeigt die Ergebnisse. Dabei bezeichnet S die Ergebnisse, die mit dem Katalysatornetz 'Vergleichsbeispiel' gemessen wurden, C bezeichnet die Ergebnisse, die mit dem Katalysatornetz ' Beispiel 1' vermessen wurden.

Angegeben ist die Selektivität zu Lachgas N₂O (linke Ordinate) in Abhängigkeit der Zeit (Abszisse). Zusätzlich ist der Temperaturverlauf angegeben (rechte Ordinate), welcher für beide Messungen gleich war.

Wie zu erkennen ist, weist C (Beispiel 1) bis ca. 2 h eine geringfügig höhere Selektivität zu N₂O auf. Danach fällt die Selektivität von C unter die von S (Vergleichsbeispiel).

### Die Erfinder interpretieren das Ergebnis folgendermaßen:

Beispiel 1 weist an der Oberfläche lediglich eine Rhodiumkonzentration von 3 Gew.-% auf, was die Bildung von Rhodiumoxidnadeln beim Aufheizen im Vergleich zum Vergleichsbeispiel mit 5 Gew.-% Rhodium deutlich reduziert, allerdings die Selektivität zu N₂O geringfügig erhöht. Nach kurzer Laufzeit oberhalb der Mindestbetriebstemperatur Tₘᵢₙ = 800°C erhöht sich die Rhodiumkonzentration im äußersten Mantel durch Diffusion von Rhodium aus dem unteren Mantel auf über 5 Gew.-% Rhodium in der Oberfläche, was die Selektivität des Katalysatornetzes zu N₂O signifikant senkt.

Dabei besteht Beispiel 1 nur zu 2,59 Gew.-% aus Rhodium und benötigt damit weniger Rhodium als das Vergleichsbeispiel mit 5 Gew.% Rhodium. Dies kann, je nach Rhodium- und Platinpreis, zusätzlich die Edelmetallkosten senken.

## Patentansprüche

1. Draht bestehend aus Platingruppenmetallen für die Herstellung von Netzkatalysatoren, enthaltend mindestens Platin und Rhodium, **dadurch gekennzeichnet, dass** der Draht als Manteldraht aufgebaut ist und aus einem Kern und einem oder mehreren vom Kern aus radialsymmetrisch übereinander angeordneten Mänteln besteht und die Rhodiumkonzentration im äußersten Mantel niedriger ist als die im direkt darunter angeordneten
• Kern, falls der Manteldraht nur aus einem Kern und einem Mantel besteht, oder
• Mantel, falls der Manteldraht aus einem Kern und zwei oder mehr Mänteln besteht,
und die Rhodiumkonzentration im äußersten Mantel 1 Gew.-% bis 3 Gew.-% ist und die Rhodiumkonzentration im darunter angeordneten Mantel oder Kern im Bereich von 5 Gew.-% bis 20 Gew.-%, bevorzugt im Bereich von 8 Gew.-% bis 12 Gew.-% ist, und die Dicke des äußersten Mantels 1 µm bis 10 µm, bevorzugt 1 µm bis 5 µm, beträgt.

2. Draht entsprechend Anspruch 1, **dadurch gekennzeichnet, dass** der Draht aus einem Kern und einem Mantel besteht.

3. Draht entsprechend Anspruch 1, **dadurch gekennzeichnet, dass** der Manteldraht aus einem Kern und zwei oder mehreren vom Kern aus radialsymmetrisch übereinander angeordneten Mänteln besteht, und der Kern zu mindestens 92 Gew.-%, bevorzugt zu mindestens 97 Gew.-% aus Platin und / oder Palladium besteht.

4. Netzkatalysator für die Katalysierung von Gasphasenreaktionen, **dadurch gekennzeichnet, dass** der Netzkatalysator ein Geflecht umfasst, welches einen Draht gemäß einem oder mehreren der Ansprüche 1 bis 3 enthält.

5. Netzkatalysator entsprechend Anspruch 4, **dadurch gekennzeichnet, dass** das Geflecht des Netzkatalysators gestrickt ist.

6. Verfahren zur Herstellung eines Netzkatalysators nach Anspruch 4 und / oder 5, **gekennzeichnet durch** die Schritte:
a. Bereitstellen von einem Bolzen, Platin und / oder Palladium umfassend,
b. Bereitstellen von einem Rohr oder mehreren Rohren, Platin und Rhodium umfassend, wobei der Innendurchmesser des dünnsten Rohres so gewählt ist, dass das dünnste Rohr bündig über den Bolzens geschoben werden kann, sowie die Durchmesser der weiteren Rohre so gewählt sind, dass sie bündig übereinander geschoben werden können und das äußerste Rohr eine geringere Rhodiumkonzentration aufweist als der darunter angeordnete Mantel oder Kern
c. Übereinander schieben der Rohre und des Bolzens, beginnend mit dem Schieben des dünnsten Rohres über den Bolzen, wonach die Rohre nacheinander mit steigendem Durchmesser aufgeschoben werden, und Verbinden des Bolzens mit dem Rohr oder den Rohren, zum Beispiel auf dem Rohrzug, wodurch ein Rohling entsteht
d. Glühen und anschließendes kaltes Walzen des Rohlings, dieser Schritt kann mehrmals wiederholt werden
e. Drahtziehen des Rohlings bis zur gewünschten Drahtstärke
f. Stricken des Katalysatornetzes aus dem Draht

7. Verfahren entsprechend Anspruch 6, **dadurch gekennzeichnet, dass** das Verbinden des Bolzens (Verfahrensschritt b) mit dem Rohr oder den Rohren durch einen Rohrzug geschieht.

8. Verfahren zur Oxidation von Ammoniak, **dadurch gekennzeichnet, dass** die Oxidation katalysiert wird durch mindestens ein Katalysatornetz entsprechend einem oder mehreren der Ansprüche 4 bis 5.

## Claims

1. Wire consisting of platinum group metals for producing grid catalysts, containing at least platinum and rhodium, **characterized in that** the wire is made as a sheath wire and consists of a core and one or more sheaths arranged one over the other outwards from the core in a radially symmetrical manner, and the rhodium concentration in the outermost sheath is lower than the rhodium concentration in the
• core, if the sheath wire consists only of a core and a sheath, or
• sheath, if the sheath wire consists of a core and two or more sheaths,
arranged directly under the outermost sheath, and the rhodium concentration in the outermost sheath is 1 wt.% to 3 wt.%, and the rhodium concentration in the sheath or core arranged under the outermost sheath is in the range of 5 wt. % to 20 wt.%, preferably in the range of 8 wt.% to 12 wt.%, and the thickness of the outermost sheath is 1 µm to 10 µm, preferably 1 µm to 5 µm.

2. Wire according to claim 1, **characterized in that** the wire consists of a core and a sheath.

3. Wire according to claim 1, **characterized in that** the sheath wire consists of a core and two or more sheaths arranged one over the other outwards from the core in a radially symmetrical manner, and the core consists of at least 92 wt.%, preferably at least 97 wt.% platinum and/or palladium.

4. Grid catalyst for catalyzing gas phase reactions, **characterized in that** the grid catalyst comprises a mesh which contains a wire according to one or more of claims 1 to 3.

5. Grid catalyst according to claim 4, **characterized in that** the mesh of the grid catalyst is knitted.

6. Method for producing a grid catalyst according to claim 4 and/or 5, **characterized by** the steps of:
a. providing a bolt, comprising platinum and/or palladium,
b. providing a tube or a plurality of tubes, comprising platinum and rhodium, the inner diameter of the thinnest tube being selected such that the thinnest tube can be pushed flush over the bolt, and the diameters of the further tubes being selected such that they can be pushed flush one over the other, and the outermost tube having a lower rhodium concentration than the sheath or core arranged under the outermost tube
c. pushing the tubes and the bolt one over the other, starting by pushing the thinnest tube over the bolt, after which the tubes are pushed on successively with increasing diameter, and connecting the bolt to the tube or tubes, for example on the tube puller, thereby creating a blank
d. annealing and subsequently cold-rolling the blank; this step can be repeated several times
e. wire-drawing the blank to the desired wire gauge
f. knitting the catalyst grid from the wire.

7. Method according to claim 6, **characterized in that** the bolt is connected (method step b) to the tube or to the tubes by means of a tube puller.

8. Method for oxidizing ammonia, **characterized in that** the oxidation is catalyzed using at least one catalyst grid according to one or more of claims 4 to 5.

## Revendications

1. Fil constitué de métaux du groupe du platine pour la fabrication de catalyseurs à grille, contenant au moins du platine et du rhodium,
**caractérisé en ce que** le fil est construit comme un fil sous gaine et est constitué d'un noyau et d'une ou de plusieurs gaines superposées de manière radialement symétrique à partir du noyau et la concentration en rhodium dans la gaine la plus externe est inférieure à celle dans
• le noyau situé directement en dessous de celle-ci, si le fil sous gaine est constitué uniquement d'un noyau et d'une gaine, ou
• la gaine située directement en dessous de celle-ci, si le fil sous gaine est constitué d'un noyau et de deux gaines ou plus,
et la concentration en rhodium dans la gaine la plus externe va de 1 % en poids à 3 % en poids et la concentration en rhodium dans la gaine ou le noyau situé en dessous de celle-ci se situe dans la plage allant de 5 % en poids à 20 % en poids, de préférence dans la plage allant de 8 % en poids à 12 % en poids, et l'épaisseur de la gaine la plus externe va de 1 µm à 10 µm, de préférence de 1 µm à 5 µm.

2. Fil selon la revendication 1, **caractérisé en ce que** le fil est constitué d'un noyau et d'une gaine.

3. Fil selon la revendication 1, **caractérisé en ce que** le fil sous gaine est constitué d'un noyau et de deux gaines ou plus superposées de manière radialement symétrique à partir du noyau, et le noyau est constitué d'au moins 92 % en poids, de préférence d'au moins 97 % en poids, de platine et/ou de palladium.

4. Catalyseur à grille pour la catalyse de réactions en phase gazeuse, **caractérisé en ce que** le catalyseur à grille comprend un treillis qui contient un fil conformément à une ou plusieurs des revendications 1 à 3.

5. Catalyseur à grille selon la revendication 4, **caractérisé en ce que** le treillis du catalyseur à grille est tricoté.

6. Procédé de fabrication d'un catalyseur à grille selon les revendications 4 et/ou 5, **caractérisé par** les étapes consistant à :
a. fournir un boulon comprenant du platine et/ou du palladium,
b. fournir un tube ou plusieurs tubes comprenant du platine et du rhodium, dans lequel le diamètre interne du tube le plus mince est choisi de sorte que le tube le plus mince peut être poussé à fleur sur le boulon, et les diamètres des autres tubes sont choisis de sorte qu'ils peuvent être poussés à fleur les uns sur les autres et le tube le plus externe présente une concentration en rhodium inférieure à celle de la gaine ou du noyau situé en dessous de celui-ci
c. pousser les tubes et le boulon les uns sur les autres, en commençant par pousser le tube le plus mince sur le boulon, après quoi les tubes sont poussés les uns sur les autres successivement avec le diamètre croissant, et raccorder le boulon au tube ou aux tubes, par exemple sur le conduit, moyennant quoi une ébauche est créée
d. recuire et ensuite laminer à froid l'ébauche, cette étape peut être répétée plusieurs fois
e. tréfiler l'ébauche jusqu'à l'épaisseur de fil souhaitée
f. tricoter la grille de catalyseur à partir du fil.

7. Procédé selon la revendication 6, **caractérisé en ce que** le raccordement du boulon (étape de procédé b) au tube ou aux tubes est effectué par un conduit.

8. Procédé permettant l'oxydation d'ammoniac, **caractérisé en ce que** l'oxydation est catalysée par au moins une grille de catalyseur selon une ou plusieurs des revendications 4 à 5.
